Europäisches Patentamt

European Patent Office

Office européen des brevets

(11) Publication number: **0 313 237**
**A1**

## (12) EUROPEAN PATENT APPLICATION

(21) Application number: 88309365.0

(22) Date of filing: 07.10.88

(51) Int. Cl.⁴: **B23B 51/04**

(30) Priority: 14.10.87 US 108370

(43) Date of publication of application:
26.04.89 Bulletin 89/17

(84) Designated Contracting States:
DE FR GB IT NL

(71) Applicant: WALKER MAGNETICS GROUP, INC.
Rockdale Street
Worcester Massachusetts 01606(US)

(72) Inventor: McDonald, Donald C,
100/3 Commons Drive
Shrewsbury Massachusetts 01545(US)

(74) Representative: Slight, Geoffrey Charles et al
Graham Watt & Co. Riverhead
Sevenoaks Kent TN13 2BN(GB)

(54) Annular hole cutter.

(57) Alternate ones (17) of a series of axially projec-
ting cutting teeth (15, 17) have single straight cutting
edges (31) which lie essentially in a common plane
which is perpendicular to the cutter axis. Intermedi-
ate teeth (15) have distinct inner and outer cutting
edges (33, 35) separated by a circumferential crest
(37) which projects axially substantially beyond the
common plane of the alternate teeth. The inner and
outer cutting edges (33, 35) of the intermediate teeth
(15) are inclined axially away from the crest (37) so
that the inner end of each of the inner cutting edges
and the outer end of each of the outer cutting edges
is substantially behind the common plane. Accord-
ingly, the cutting edges (31, 33, 35) produce a
multiplicity of slender chips which are easily fed
away from the teeth by flutes (16, 18) in the body of
the cutter.

FIG. 2

FIG. 1

## ANNULAR HOLE CUTTER

### Background of the Invention

The present invention relates to an annular hole cutter and more particularly to an annular hole cutter having an improved tooth design.

When drilling holes through heavy metal plate, it is quite usual to utilize an annular hole cutter, sometimes referred to as a trepanning drill, in order to create a hole of the desired size without having to turn all of the material within the hole into chips as would be required with an ordinary twist drill. As is understood in the art, an annular hole cutter removes a ring of metal leaving a central core or plug which does not need to be removed as chips but rather is removed as one piece.

In order to minimize the actual amount of metal converted into chips, it is desirable that the cutter shell or body have a circumferential wall section which is as thin as possible, yet it is necessary that the shell be provided with flutes or gullets so that the chips which are formed may be efficiently removed. As is understood in the art, it is easier to remove multiple slender chips than it is to feed out thick heavy chips.

Accordingly, various attempts have been made in the prior art to develop cutting tooth arrangements which generate a multiplicity of slender chips. While various of the prior art design are quite effective in forming and removing slender chips, the cutters themselves tend to be quite complex and expensive to manufacture. For example, in the cutter disclosed in US Patent 28,416, each tooth provides two cutting edges and these cutting edges are offset circumferentially. Such circumferentially offset teeth are difficult to fabricate and further entail weakly supported cutting points which are subject to early failures. In addition, the preferred design of the type of cutter shown in the US Patent 28,416 involves alternating teeth, both forms of which provide two cutting edges but there is a radial shift of the dividing line between inner and outer cutting edges on alternating teeth.

### Summary of the Invention

Briefly, an annular hole cutter according to the present invention comprises a hollow cylindrical shell or body having at one end a mounting stem and at the other end a plurality of axially projecting cutting teeth even in number and separated by gullets. Alternate teeth in the plurality have single straight cutting edges which lie essentially in a common plane which is perpendicular to the cutter axis. Intermediate teeth have distinct inner and outer cutting edges separated by a circumferential crest with the crest projecting axially well beyond the common plane. The inner and outer cutting edges are inclined axially away from the crest so that the inner end of each of the inner cutting edges and the outer end of each of the outer cutting edges is substantially behind the common plane. A series of flutes are provided in the outer periphery of the shell for conducting chips away from the cutting teeth.

One way of carrying out the present invention will now be described in detail with reference to drawings which show one specific embodiment.

### Brief Description of the Drawings

FIG. 1 is a side view of an annular hole cutter constructed in accordance with the present invention;

FIG. 2 is an end view of the cutter of Fig. 1, showing the arrangement of cutting teeth employed therein;

FIG. 3 is a face view of a single edged cutting tooth employed in the cutter of Figs. 1 and 2, taken substantially on the line 3-3 of Fig. 2;

FIG. 4 is a face view of a two-edged cutting tooth employed in the cutter of Fig. 1 and 2, taken substantially on the line 4-4 in Fig. 2;

FIG. 5 is a diagram which is essentially a circumferential projection of the views of Figs. 3 and 4 to show the relative heights of the different types of cutting teeth employed; and

FIGS. 6 and 7 are diagrams illustrating the manner in which the tooth arrangement of the cutter of Figs. 1 and 2 generates multiple slender chips.

Corresponding reference characters indicate corresponding parts throughout the several views of the drawings.

### Detailed Description of the Illustrated Embodiments

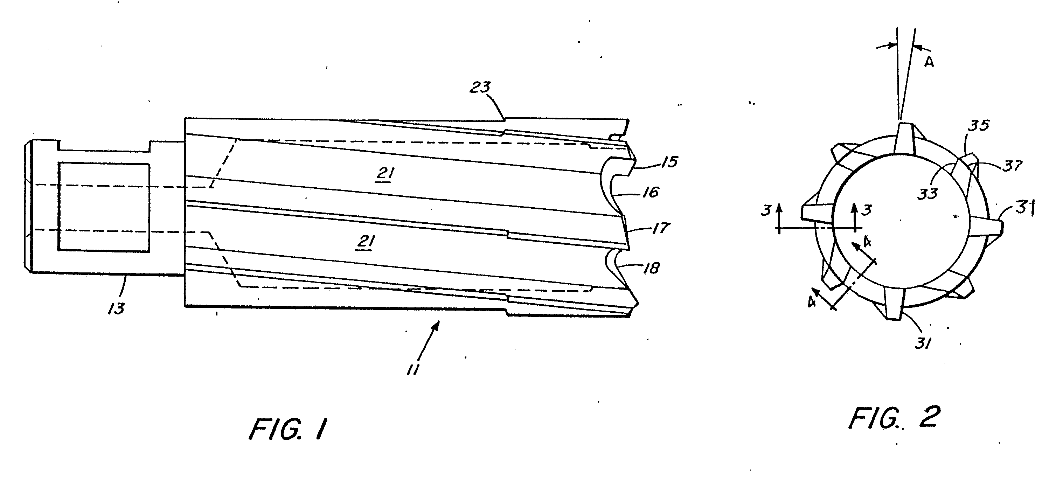

Referring now to Fig. 1, it may be seen that the cutter illustrated there comprises a hollow cylindrical shell portion, designated generally by reference character 11, having at one end a mounting shank or stem 13 and, at the other end, a plurality of axially projecting cutting teeth. The cutting teeth are even in number and are of two types designated, respectively, by reference characters 15 and 17. The teeth are separated by gullets 16 and 18. Flutes 21, having a slight helical twist, are provided for feeding chips away from the teeth 15 and 17. Only the distal end of the cutter body is of full diameter and the portions of the shell between the flutes away from the cutting end are of slightly reduced diameter, i.e. the portions of the shell to the left of the shoulders indicated by reference character 23 in Fig. 1.

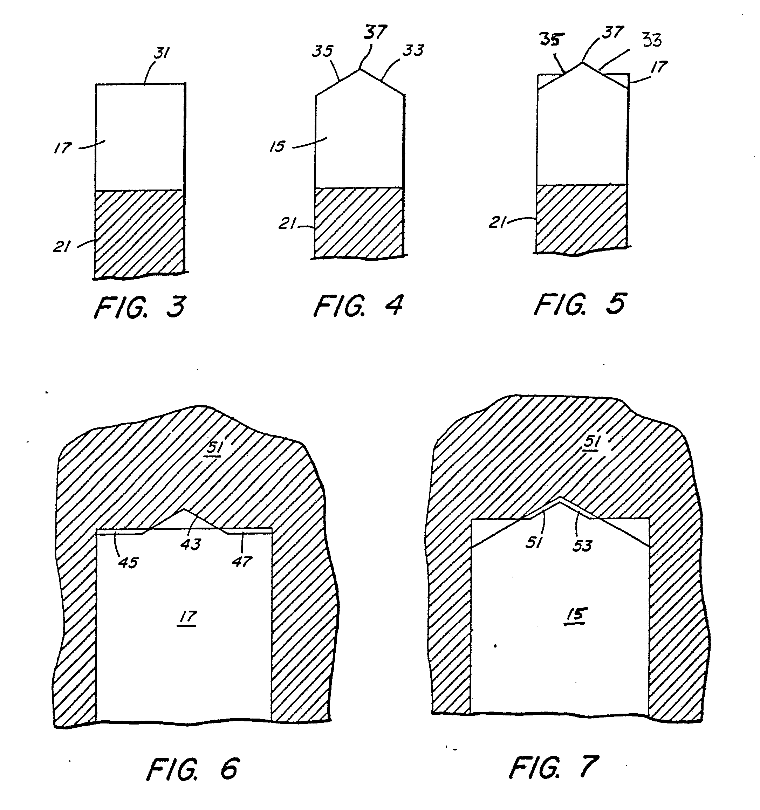

With reference to Figs. 2 and 3, it can be seen that each of the alternate cutting teeth 17 provides a single straight cutting edge, this edge being designated by reference character 31. The cutting edges 31 have a slight negative rake with respect to the radial, e.g. ten degrees, so that the line of the cutting edge does not pass through the axis of the cutter. The rake is designated by "A" on Fig. 2. The cutting edges 31 do, however, essentially lie in a common plane which is perpendicular to the cutter axis.

With reference to Figs. 2 and 4, it can be seen that each of the intermediate teeth 15 utilizes two cutting edges, an inner cutting edge designated by reference character 33 and an outer cutting edge designated by reference character 35. The axially-facing rake faces forming the cutting edges 33 and 35 are separated by a circumferential crest designated by reference character 37. As may be seen in Fig. 5, the crest 37 projects axially substantially beyond the common plane of the single edged teeth 17, i.e. further away from the stem 13. As may also be seen in Fig. 5, the inner cutting edge 33 and the outer cutting edge 35 are inclined, with respect to the cutter axis, away from the crest so that the inner end of each of the inner cutting edges 33 and the outer end of each of the outer cutting edges 35 is substantially behind the common plane of the straight single cutting edges of the teeth 17. The cutting edges 33 and 35 may also each have a slight rake with respect to the radial, as illustrated.

In Fig. 6, a piece of metal plate being bored is designated generally by reference character 51. Assuming a crested tooth of the type designated by reference character 15 has just made a cut deepening the V-shaped groove in the material, the groove being indicated by reference character 43, the following tooth, being of the type designated by reference character 17, will cut a pair of chips having cross-sections corresponding to the areas designated by reference characters 45 and 47. Conversely, after a single edge tooth 17 has deepened the flats on either side of the notch 43, the next doubly-edged tooth 15 will cut a chip or chips having cross-sections corresponding to the areas designated by reference characters 51 and 53 in Fig. 7. While these areas, in one sense, comprise a single joined region, it has been found that, because of the inclination between the two areas, the material removed will often fracture into two chips corresponding to the separate areas 51 and 53.

From the foregoing, it can be seen that the cutter 11, though it is relatively easy to fabricate, operates to form three or four slender chip types which are relatively easily emptied out of the gullets through the flutes 21. Thus, cutting can proceed relatively quickly. Further, since no offset cutting edges are required in any single tooth, the teeth themselves are relatively strong and not subject to early failure since all the cutting edges are relatively well supported.

There has been described with reference to the drawings an annular hole cutter which generates a multiplicity of slender chips which are easily fed away from the cutting teeth; the cutter does not require the use of a circumferential offset between distinct cutting edges in the same tooth; the cutter provides long life and is sturdy and highly reliable; the cutter is relatively simple and inexpensive to manufacture.

## Claims

1. An annular hole cutter comprising a hollow cylindrical shell having, at one end, a mounting stem, and at the other end, a plurality of axially projecting cutting teeth, even in number, alternate teeth having single straight cutting edges which lie essentially in a common plane which is perpendicular to the cutter axis, intermediate teeth having distinct inner and outer cutting edges separated by a circumferential crest with the crests projecting axially substantially beyond said plane, and with the inner and outer cutting edges being inclined axially away from the crest so that the inner end of each of said inner cutting edges and the outer end of each of said outer cutting edges are substantially behind said plane.

2. An annular hole cutter comprising a hollow cylindrical shell having, at one end, a mounting stem and, at the other end, a plurality of axially projecting cutting teeth, even in number, separated by gullets, alternate teeth having single straight cutting edges which lie essentially in a common plane which is perpendicular to the cutter axis, intermediate teeth having distinct inner and outer straight cutting edges separated by a circumferential crest, with the crests projecting axially substantially beyond said plane, and with the inner and outer cutting edges being inclined axially away from the crest so that the inner end of each of said inner cutting edges and the outer end of each of said outer cutting edges are substantially behind said plane, there being flutes in the outer periphery of said shell for conducting chips from said gullets away from said cutting teeth.

3. A hole cutter as set forth in claim 2 wherein the single straight cutting edges on the alternate teeth have a negative rake with respect to the radial.

FIG. 1

FIG. 2

EP 0 313 237 A1

*FIG. 3*

*FIG. 4*

*FIG. 5*

*FIG. 6*

*FIG. 7*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 167 983 (NITTO KOHKI) <br> * page 2, lines 14-115; figures 1-3 * | 1,2 | B 23 B 51/04 |
| A | EP-A-0 229 402 (WALKER-HAGOU) <br> * claim 1; figures 1-6 * | 1,2 | |
| A | GB-A-2 146 923 (JANCY ENGINEERING) <br> * page 2, lines 56-59; figures 1-4 * | 1,3 | |
| A | PATENT ABSTRACTS OF JAPAN <br> vol. 5, no. 162 (M-92)(834), 17th October 1981; & JP - A - 56 89415 (MAN DESIGN) 20-07-1981 | 1 | |
| D,A | US-E- 28 416 (HOUGEN) <br> * claim 1 * | 1 | |

TECHNICAL FIELDS SEARCHED (Int. Cl.4)

B 23 B 51/04
B 28 D 1/14
E 21 B 10/02

The present search report has been drawn up for all claims

| Place of search | Date of completion of the search | Examiner |
|---|---|---|
| BERLIN | 11-01-1989 | MARTIN A E W |